(19) Europäisches Patentamt
European Patent Office
Office européen des brevets

(11) **EP 3 671 387 B1**

(12) **EUROPEAN PATENT SPECIFICATION**

(45) Date of publication and mention
of the grant of the patent:
**23.10.2024 Bulletin 2024/43**

(51) International Patent Classification (IPC):
***G05B 23/02*** *(2006.01)* ***G05B 19/4099*** *(2006.01)*

(52) Cooperative Patent Classification (CPC):
**G05B 19/4099; G05B 23/0283; B33Y 50/00**

(21) Application number: **18382967.0**

(22) Date of filing: **21.12.2018**

(54) **MONITORING OF ADDITIVE MANUFACTURING PROCESS BY MACHINE LEARNING ALGORITHMS**

ÜBERWACHUNG EINES VERFAHRENS ZUR GENERATIVEN FERTIGUNG DURCH MASCHINENLERNALGORITHMEN

SURVEILLANCE DE PROCESSUS DE FABRICATION ADDITIVE AU MOYEN D'ALGORITHMES D'APPRENTISSAGE DE MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2020 Bulletin 2020/26**

(73) Proprietor: **Bull SAS**
**78340 Les Clayes-sous-Bois (FR)**

(72) Inventors:
• **Barberan, Miguel Angel**
**28223 Madrid (ES)**

• **Albert, Enrique Garcia**
**28050, Madrid (ES)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**US-A1- 2018 341 248**

**Description**

FIELD OF THE INVENTION

The present invention relates to the field of additive manufacturing. In particular, it concerns the monitoring in real-time of additive manufacturing processes for determining anomalies.

BACKGROUND OF THE INVENTION

Additive manufacturing is a the set of any of various processes in which material is joined or solidified under computer control to create a three-dimensional object, with material being added together (such as liquid molecules or powder grains being fused together).

The manufactured objects can be of almost any shape or geometry and typically are produced using digital model data from a 3D model.

There are many different technologies, used in the 3D printing process, like for instance Fused Deposition Modeling (FDM), Selective Laser Singering (SLS), Selective Laser Melting (SLM), etc.

Some, if not all, of these techniques imply that the used materials are very sensitive to some steps and constraints of the process (like melting or submission to high-energy laser, for instance). However, the physical phenomena are numerous and may interact with each other, making it so far difficult to develop mathematical models to correlate any defects in the manufactured product with the various technical parameters of the manufacturing process.

The current quality management of those manufacturing processes are based on measurements of only few process variables. US 2018/341248 A1 exemplifies the state of the art.

SUMMARY OF THE INVENTION

The object of the present invention is to alleviate at least partly the above mentioned drawbacks.

This object is achieved with a method according to claim 1 and a monitoring system according to claim 4.

Further features and advantages of the invention will appear from the following description of embodiments of the invention, given as nonlimiting examples, with reference to the accompanying drawings listed hereunder.

BRIEF DESCRIPTION OF THE DRAWINGS

Fig. 1 shows a general architecture according to embodiments of the invention.
Fig. 2 shows a general flow chart according to embodiments of the invention.
FIGS. 3a, 3b, 3c, 3d, 3e, 3g show further examples of parameters which can be used according to embodiments of the invention.

DETAILED DESCRIPTION OF THE INVENTION

The invention can apply, in particular, to the SLM additive manufacturing process.

Selective laser melting (SLM), also known as direct metal laser sintering (DMLS) or laser powder bed fusion (LPBF), is a rapid prototyping, 3D printing, or additive manufacturing technique designed to use a high power-density laser to melt and fuse metallic powders together. SLM is sometimes considered to be a subcategory of selective laser sintering (SLS). However, the SLM process has the ability to fully melt the metal material into a solid three-dimensional part unlike other types of SLS. The SLM process has been described for instance in the European patent EP0946325.

Some further explanations are available on wikipedia:
https://en.wikipedia.org/wiki/Selective laser melting

According to embodiments, the invention aims in characterize in real-time the SLM materials and processes, so as to trigger alarms in case of anomalies, or defects, or risk situations. Doing so, the number of trials and errors (and resulting waste of time and resources) can be dramatically reduced.

Additive manufacturing processes in general, and SLM in particular, are very sensitive to many parameters. Variations in process parameters and material attributes can influence not only the microstructural features of the resulting product but may also lead to the generation of defects. Any feature seen in the microstructure of the manufactured product that deviates from the desired one can be considered as defect, or anomaly, depending on its impact on the final application (including potential customer requirements). In other words, defect, or anomaly, can be understood as a structural deviation from a desired uniform, isotropic, fully dense solid.

Typical defects can be classified into

- Porosity defects. These are very common defects found in AM products. This category encompasses several types of porosity defects: formation of keyholes resulting in entrapped pores when too much power is applied, angular shaped voids (known as Lack Of Fusion, LOF), balling phenomenon generated mainly by insufficient material being present in the liquid phase to promote sintering. A sub-critical energy density has been identified as the primary cause of balling.
- Residual stresses. These are produced during the SLM process when are applied too rapid repeated heating and cooling cycles on successive layers of the material.
- Geometrical anomalies, including dimensional inaccuracy and high surface roughness.
- Anisotropy and phase stability. These comprise changes in the grain structure, the phases that are present, their distribution within the microstructure, etc. and also the anisotropy within the material properties caused by different scanning patterns and process parameters.
- Microcracks. Such cracks can be formed during the solidification as a consequence of residual stresses.
- Oxide inclusions. These inclusions can produce internal stress to the material.

The way each kind of defects influences the resulting production is different. Therefore, not only it is needed to detect them but also to classify them in order to predict the future mechanical behavior of the additive manufacturing. However, the combined influence of all related parameters have never been described and even well understood.
Therefore, the inventors consider it crucial to gather as many parameters as possible so as to avoid any pieces of information which could be of importance to determine a defect in the resulting product or at least a risk of defect.
It is thus important to get values of parameters which can be both static (parameters of the used materials, for instance), or dynamic (measurement on the used materials or on the on-going additive manufacturing process) Those parameters may include:

Powder parameters:

- powder morphology (spherical irregular...)
- particle size distribution
- impurities
- surface chemistry

Material parameters

- Absorptivity
- Thermal diffusivity
- Melting temperature
- Specific heat capacity
- Enthalpy at melting
- Viscosity of the molten pool
- Surface tension solid-liquid interface
- Surface tension solid-vapor interface
- Surface tension liquid-vapor interface
- Density at melting
- Atomic mass
- Austenitized temperature
- Martensite temperature
- Carbon content in steel

Storage parameters

- Pressure (average)
- Temperature (average)
- Humidity (average)
- Storage time

Pre-process parameters

- Build specimens between calibration intervals
- Chamber temperature
- Room temperature
- Chamber humidity
- Room humidity
- Packing density of powder bed
- Powder temperature
- Temperature building platform
- Argon concentration
- Oxygen concentration

Process parameters

- Laser power
- Hatch distance
- Beam diameter
- Layer thickness
- Scan speed
- Pitch between specimens
- Size of scan vector length
- Orientation of the scan vector
- Order of scanning and the rotation of each subsequent layer
- Block size in chessboard strategy
- Interaction time
- Recoating speed
- Number of powder recycling
- Peak temperature of the melt-pool in each thermal-cycle (history)
- Healing rate of the melt-pool in each thermal-cycle (history)
- Cooling rate of the melt-pool in each thermal-cycle (history)
- Number of supports
- Position of supports
- Specific heat capacity supports
- Absorptivity supports
- Thermal conductivity supports
- Thickness supports
- Area/Volume of built part
- Contact area with Argon gas
- Contact area with supports
- Contact area with built parts
- Contact area with powder
- Chamber pressure history
- Chamber humidity history
- Turbulence of Argon gas inside chamber

Machine specifications

- Focal distance
- Wavelength
- Beam diameter at focal point
- Chamber dimensions
- Specific heat capacity supports of chamber walls
- Absorptivity supports of chamber walls
- Thermal conductivity of chamber walls
- Thickness of chamber walls
- Tilt angle respect to welding direction
- Time of service of machines (years)
- Number of tests between calibrations
- Precision of sensors

- Intensity distribution profile of beam laser
- Flatness building platform
- Specific heat capacity building platform
- Absorptivity building platform
- Thermal conductivity building platform
- Thickness building platform

Post-processing parameters

- Chamber temperature at opening door
- Time spent in the chamber once the manufacturing process is complete

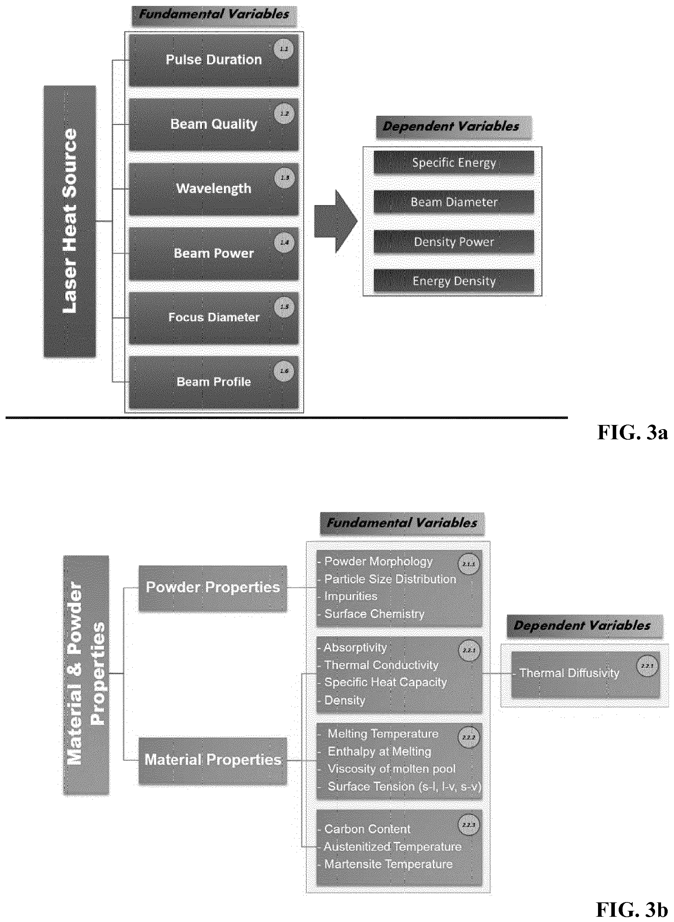

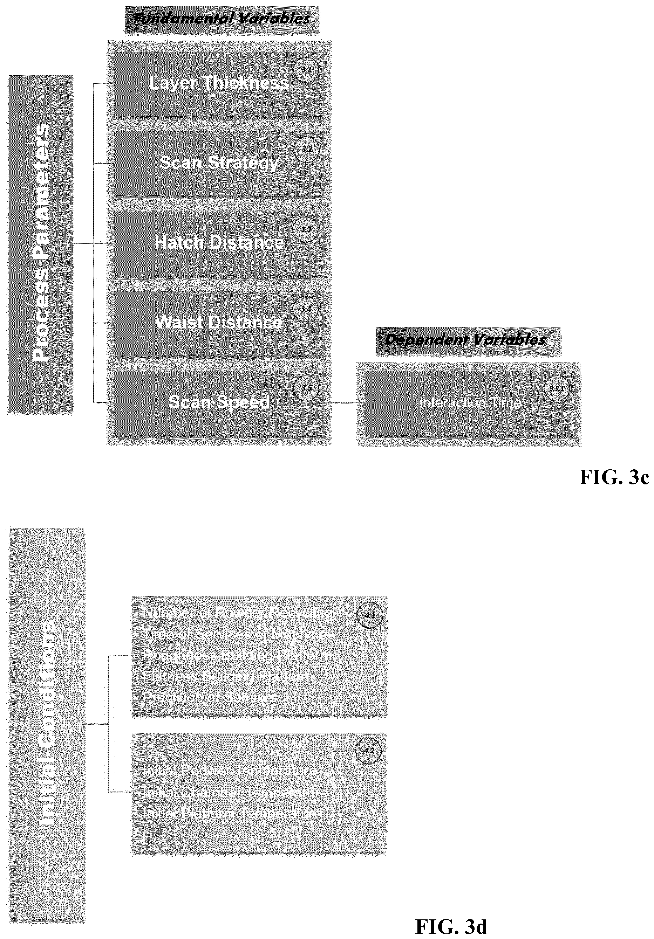

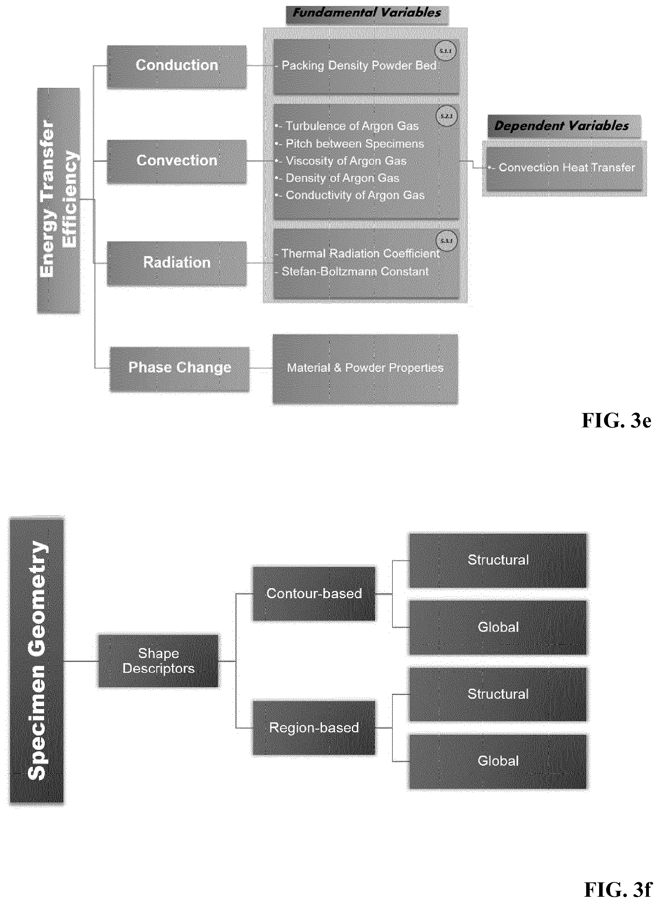

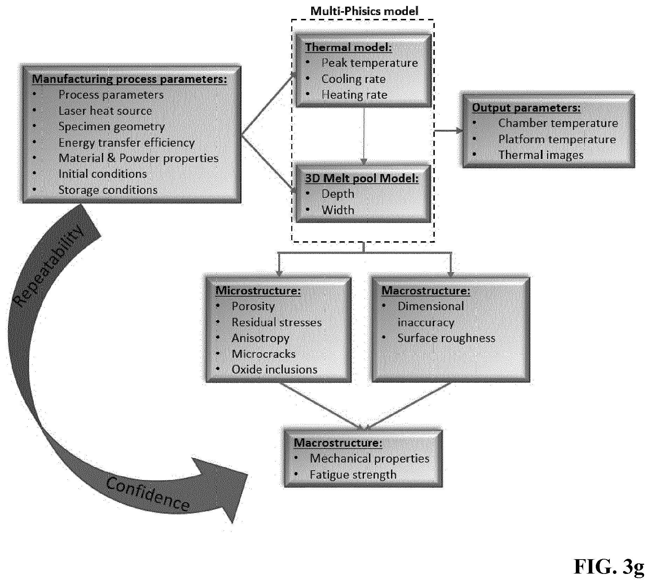

FIGS. 3a, 3b, 3c, 3d, 3e, 3g provides further examples of parameters which can be used, and how they can be classified and interrelated.

It appears clearly from this list, which shall not be understood as exhaustive, that all parameters which may have an influence on the manufacturing process should be considered, regardless of whether it relates to the manufacturing system 1, to the materials 2, to the environmental context, to the preprocessing and postprocessing phases, etc.

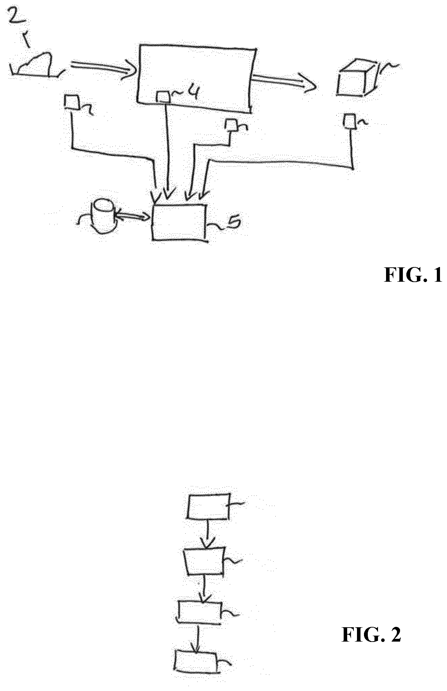

As depicted on FIG 1, dynamic parameters may (at least partly) provided by sensors arranged in the vicinity of an additive manufacturing system 1. The AM system 1 may be any machine known in the art or still to be designed aiming in producing a product 3 from materials 2.

A product should be here understood as any solid object built by an AM machine. Accordingly a product may be a "sub product" of a final product. It can be sold as it, or assembled to other products, parts or components, at a later stage to produce a final product. These aspects are not part of the invention and will thus not be further described.

The term "vicinity" should be understood here, as accessible to the skilled person, so that the technical function of the sensors can be fulfilled so as to measure meaningful data on the AM process. The actual meaning of the "vicinity" (i.e. the range in mms or cent-meters) is therefore dependent on the type of sensors and on its technology.

Some of these sensors can be integrated into the AM system 1 itself, like to one providing the scan speed for instance.

Some other parameters (static or dynamic) can be retrieved from status information of the AM system 1.

Some static parameters can be fed by a process operator into a database associated with the monitoring system 5. These information can come from databooks, specifications of the AM system 1 and of the materials 1.

The measurements of the process parameters shall not be destructive, i.e. they need to not modify the behavior of the manufacturing process and, at least, to have no impact on the quality of the product 3.

These various parameters, or part of them, can then be fed to the monitoring system 5, in a step S1 depicted in FIG. 2.

From these acquired parameters, the monitoring system 5 can perform a data transformation step S2 for transforming said parameters into data vectors.

According to embodiments, these data vectors are constituted by data based on the acquired parameters values but to which a mathematical transformation have been applied. They are therefore different data than the acquired ones. In particular, a data may be based on several parameters.

These data vectors are configured so as to be usable by a trained classification model to derive a risk of defect of the product, in an automatic prediction step S3. This step S2 can then be considered as a data reduction and formatting step, aggregating raw parameter values into structured data.

The monitoring system 5 outputs a risk of defect on the basis of this trained classification model, which can be stored in a memory 6 and trained beforehand on a training set.

The automatic prediction step S3 can be embodied by various machine learning algorithms based on classifier, including for instance:

- Nearest Neighbour
- Bayes Classifier
- Neural Network
- Support Vector Machine (SVM)

The best suitable algorithm will be selected for the prediction

According to some embodiments, then, Support Vector Machine can be used for the automatic prediction step S3. Support vector machines (SVM also known as support vector networks) are supervised learning models with associated learning algorithms that analyze data used for classification and regression analysis. Given a set of training examples, each marked as belonging to one or the other of two categories, an SVM training algorithm builds a model that assigns new examples to one category or the other, making it a non-probabilistic binary linear classifier (although methods such as Platt scaling exist to use SVM in a probabilistic classification setting). An SVM model is a representation of the examples as points in space, mapped so that the examples of the separate categories are divided by a clear gap that is as wide as possible. New examples are then mapped into that same space and predicted to belong to a category based on which side of the gap they fall.

Further explanations on SVM can be found on the related Wikipedia page: https://en.wikipedia.org/wiki/Support vector machine, or in the book:

Cristianini, Nello; and Shawe-Taylor, John; An Introduction to Support Vector Machines and other kernel-based learning methods, Cambridge University Press, 2000. ISBN 0-521-78019-5

The automatic prediction outputs figures representative of a risk of defects. In a subsequent step S4, an alert can be triggered on the basis of such a risk. For instance, the alert can be fired if the risk value is above a preset threshold.

The alert can be produced to a human process operator by a man-machine interface. It can be an alert message on computer screen, a sound alert, a flashing light, or whatever means for alerting a human for prompting to react quickly. His reaction can be to stop immediately the AM process, or to survey further information before deciding doing so.

According to embodiments, the alert may automatically put the Additive Manufacturing system 1 on hold.

The monitoring system 5 is configured so as to output risks of defect in real time, according to the fed flow of parameters. Consequently, the output risk is representative of the situation at the time of the measurement of the dynamical parameter (with a negligible delay due to the processing time). Accordingly, the process operator can instantaneously react on the risk of defect and decide to interrupt the process by stopping the Additive Manufacturing system 1.

According to embodiment of the invention, the classification model 5 and the considered parameters are determined so as to capture the characteristics and behavior of the weld profile in laser conduction, in terms of fundamental laser material interaction parameters.

The objective is to monitor the weld geometry during the SLM process in order to get high quality welding (i.e. by getting a risk of defect on the contrary situation), and thus to minimize the porosity.

According to embodiments, these fundamental parameters are the scan speed v, the beam diameter $D_b$, the laser power P and the scan strategy. They are ones of the most important parameters due to their influence in the temperature.

Once the proper parameters determined for feeding the monitoring system, the classification model should be trained on a training set constituted by the same parameters, so that it can reflect the considered physical phenomenon, i.e. the weld profile in laser conduction.

One may remark that by means of manufacturing specimens, it will be labeled with defect or non-defect each one of the examples of the training dataset described by a feature vector with the different values of input parameters which define the SLM process.

From the acquired parameters, the monitoring system 5 performs a data transformation step S2 for transforming said parameters into data vectors.

These data characterize the spatial and temporal distribution of the laser energy on the surface of the product under manufacturing

Power density:

$$P_d = \frac{4 \cdot P}{\pi \cdot D_b{}^2} \ \left[ W \cdot m^{-2} \right]$$

Interaction time:

$$t_i = \frac{v}{D_b} \ \left[ s \right]$$

Specific point energy:

$$E_{sp} = P_d \cdot t_i \cdot \frac{\pi \cdot D_b{}^2}{4} \ \left[ J \right]$$

Energy density:

$$E_d = P_d \cdot t_i \ [J \cdot m^{-2}]$$

According to an embodiment of the invention, from these data, a thermal map is obtained with a simulation software.

The idea is to generate another analytic algorithm trained with thermal simulation results from software in order to predict the thermal mapping as function of scan strategy geometry and the most influence parameters in the temperature. Then, this thermal map, dependent of time, will be used as a new input variable together other variables in the classification algorithm for the porosity prediction.

According to another embodiment of the invention, from these data, some analytic calculations are performed: Temperature gradient through thickness as a function of distance from surface of laser treated specimen is an important parameter which depends on many parameters. It can be estimated using the following Ashby and Easterling heat transfer equations:

$$T(z,t) = T_0 + \left[ \frac{\left(\frac{A \cdot P}{v}\right)}{2 \cdot \pi \cdot \lambda \cdot [t \cdot (t + t_0)]^{1/2}} \right] \cdot exp\left( -\left( \frac{(z + z_0)^2}{4 \cdot \alpha \cdot t} \right) \right)$$

where $T_0$ is room temperature; $A$ is the absorptivity; $P$ is laser power; $v$ is scan speed; $\lambda$ is thermal conductivity, t is time; z is depth below surface; $\alpha$ is thermal diffusivity and $t_0$ is given by:

$$t_0 = \frac{D_b}{16 \cdot \alpha}$$

where $D_b$ is beam diameter, and $z_0$ is given by:

$$z_0 = \left[ \left( \frac{\pi^{1/2}}{e} \right) \cdot \left( \frac{\alpha \cdot D_b}{2 \cdot v} \right)^{1/2} \cdot \frac{D_b}{2} \right]^{1/2}$$

where e is the base of the natural logarithm (2.72)

The instantaneous heating and cooling rates are modelled using the following equation:

$$\frac{dT}{dt}(z,t) = \left( T - \frac{T_0}{t} \right) \cdot \left\{ \left[ \frac{(z + z_0)^2}{4 \cdot \alpha \cdot t} \right] \cdot \left[ \left( \frac{1}{2} \right) \cdot \left( 2 \cdot t + \frac{t_0}{t} + t_0 \right) \right] \right\}$$

And the peak temperature achieved in each thermal-cycle can be determined from the next equation:

$$T_{peak}(z) = T_0 + \frac{2 \cdot A \cdot \left( \frac{P}{v} \right)}{e \cdot \pi \cdot \rho \cdot C_p \cdot (z + z_0)^2}$$

Another important parameter is the ratio between the energy $E_{melt}$ utilized for melting and the energy dissipated for conduction losses within the bulk data.

$$E_{Melt} = \left[ \frac{1}{2} \cdot \pi \cdot z_{Melt}^2 \cdot l \cdot \rho \right] \cdot [Cp \cdot (T_M - T_0) + H_m]$$

where $E_{Melt}$ is the energy utilized for melting; $z_{Melt}$ is depth of the melt zone; $l$ is the length of scan vector, $\rho$ is density; $Cp$ is heat capacity; $T_M$ is melting temperature, $T_0$ is room temperature and $H_m$ is enthalpy of meting.

In the same way, the energy utilized for heating of the material but not contributing to the melt (conduction losses) can be calculated by summation of the areas for each temperature interval between the melting point and 200°C, according to:

$$E_{Loss} = \sum \left(\frac{1}{2} \cdot \pi \cdot (z_{Melt}^2 - z_{1400}^2) \cdot l \cdot \rho\right) \cdot (Cp \cdot (T_M - T_0))$$
$$+ \left(\frac{1}{2} \cdot \pi \cdot (z_{1300}^2 - z_{1400}^2) \cdot l \cdot \rho\right)$$
$$\cdot (Cp \cdot (T_{1300} - T_0)) + \dots + \left(\frac{1}{2} \cdot \pi \cdot (z_{200}^2 - z_{300}^2) \cdot l \cdot \rho\right)$$
$$\cdot (Cp \cdot (T_{200} - T_0))$$

All these transformed data can be considered as a vector, which can then be used for the automatic prediction step S3 for deriving a risk of defect of said product on the basis of the trained classification model; and for the alerting step S4 for triggering an alert according to this risk.

One aspect of the invention lies in the fact that instead of considering various process parameters as independent, the invention aims in considering them are interrelated and « as a whole », e.g. as forming a vector of parameters' values, and tries to match them to potential resulting defects by a classification method.

For this reason, according to embodiments based on the thermal map as previously described, the thermal process is modeled by Finite Element Model (FEM), in order to compact a lot of variables into a few ones which describe the thermal map during time. FEM medialization can be performed by software products available on the market.

By contrast, the invention considers all parameters as a whole in the classification method, so that the bar of the number of considered process parameters is raised. This allows then to incorporate as many process parameters as possible so as to capture the most comprehensive view (or model) of the manufacturing process.

Then, according to aspects of the invention, it becomes possible to capture the complexity of the conjunction of all (measurable) process parameters over the final quality of the manufacturing process.

The invention has been described with reference to preferred embodiments. However, many variations are possible within the scope of the claims.

**Claims**

1. Method for monitoring an additive manufacturing process of a product (3), by Selective Laser Melting, SLM, process performed by an additive manufacturing system (1) from at least one material (2), said method comprising acquisition step (S1) of parameters including static parameters about said at least one material and dynamic parameters measured by sensors (4) placed on the vicinity of said additive manufacturing system; a data transformation step (S2) for transforming said parameters into data vectors; an automatic prediction step (S3) for deriving a risk of defect for said product on the basis of a trained classification model using said data vectors as input; and a alerting step (S4) for triggering an alert according to said risk;

   wherein said classification model and said parameters are determined so as to capture the characteristics and behavior of the weld profile in laser conduction; and

   wherein said parameters comprise a scan speed, v, a laser power P and a beam diameter $D_b$ and said transformation step comprises the determination of a power density $P_d$, an interaction time $t_i$, a specific point energy $E_{sp}$ and an energy density $E_d$, so that:

$$P_d = \frac{4 \cdot P}{\pi \cdot D_b^2} \ [W \cdot m^{-2}]$$

$$t_i = \frac{v}{D_b} \ [s]$$

$$E_{sp} = P_d \cdot t_i \cdot \frac{\pi \cdot D_b^2}{4} \ [J]$$

$$E_d = P_d \cdot t_i \quad [J \cdot m^{-2}]$$

**2.** Method according to the previous claim, wherein said automatic prediction step (S3) comprises performing a Support Vector Machine, SVM, algorithm.

**3.** Method according to the previous claim, wherein a thermal map is obtained .

**4.** Monitoring system (5) for an additive manufacturing system (1) configured to perform an additive manufacturing process of a product (3) by Selective Laser Melting, SLM, process, from at least one material (2), comprising means configured for

- acquiring parameters including static parameters about said at least one material and dynamic parameters measured by sensors (4) placed on the vicinity of said additive manufacturing system;
- transforming said parameters into data vectors;
- automatically deriving a risk of defect for said product on the basis of a trained classification model using said data vectors as inputs; and
- triggering an alert according to said risk;

wherein said classification model and said parameters are determined so as to capture the characteristics and behavior of the weld profile in laser conduction; and

wherein said parameters comprise a scan speed, v, a laser power P and a beam diameter $D_b$ and said transformation step comprises the determination of a power density $P_d$, an interaction time $t_i$, a specific point energy $E_{sp}$ and an energy density $E_d$, so that:

$$P_d = \frac{4 \cdot P}{\pi \cdot D_b{}^2} \quad [W \cdot m^{-2}]$$

$$t_i = \frac{v}{D_b} \quad [s]$$

$$E_{sp} = P_d \cdot t_i \cdot \frac{\pi \cdot D_b{}^2}{4} \quad [J]$$

$$E_d = P_d \cdot t_i \quad [J \cdot m^{-2}]$$

**5.** Monitoring system (5) according to the previous claim, further configured to derive said risk by performing a Support Vector Machine, SVM, algorithm.

**Patentansprüche**

**1.** Verfahren zum Überwachen eines Additivfertigungsprozesses eines Produkts (3) durch den Prozess des selektiven Laserschmelzens (SLM), der von einem Additivfertigungssystem (1) aus mindestens einem Material (2) durchgeführt wird, wobei das Verfahren den Erfassungsschritt (S1) von Parametern umfasst, darunter statische Parameter bezüglich des mindestens einen Materials und dynamische Parameter, die von in der Nähe des Additivfertigungssystems platzierten Sensoren (4) gemessen werden; einen Datentransformationsschritt (S2) zum Transformieren der Parameter in Datenvektoren; einen automatischen Vorhersageschritt (S3) zum Ableiten eines Defektrisikos für das Produkt auf der Grundlage eines trainierten Klassifizierungsmodells unter Verwendung der Datenvektoren als Eingabe; und einen Warnschritt (S4) zum Auslösen einer Warnung entsprechend dem Risiko;

wobei das Klassifizierungsmodell und die Parameter so bestimmt werden, dass die Eigenschaften und das Verhalten des Schweißprofils bei der Laserleitung erfasst werden; und

wobei die Parameter eine Scan-Geschwindigkeit v, eine Laserleistung P und einen Strahldurchmesser $D_b$

umfassen und der Transformationsschritt die Bestimmung einer Leistungsdichte $P_d$, einer Interaktionszeit $t_i$, einer bestimmten Punktenergie $E_{sp}$ und einer Energiedichte $E_d$ umfasst, so dass:

$$P_d = \frac{4 \cdot P}{\pi \cdot D_b{}^2} \; [W \cdot m^{-2}]$$

$$t_i = \frac{v}{D_b} \; [s]$$

$$E_{sp} = P_d \cdot t_i \cdot \frac{\pi \cdot D_b{}^2}{4} \; [J]$$

$$E_d = P_d \cdot t_i \; [J \cdot m^{-2}]$$

2. Verfahren nach dem vorstehenden Anspruch, wobei der automatische Vorhersageschritt (S3) das Ausführen eines Support Vector Machine-Algorithmus (SVM-Algorithmus) umfasst.

3. Verfahren nach dem vorstehenden Anspruch, wobei eine Wärmekarte erstellt wird.

4. Überwachungssystem (5) für ein Additivfertigungssystem (1), das dazu konfiguriert ist, einen Additivfertigungsprozess eines Produkts (3) durch den Prozess des selektiven Laserschmelzens (Selective Laser Melting, SLM) aus mindestens einem Material (2) durchzuführen, umfassend Mittel, die konfiguriert sind zum:

   - Erfassen von Parametern, einschließlich statischer Parameter bezüglich des mindestens einen Materials und dynamischer Parameter, die durch in der Nähe des Additivfertigungssystems platzierte Sensoren (4) gemessen werden;
   - Transformieren der Parameter in Datenvektoren;
   - automatisches Ableiten eines Defektrisikos für das Produkt auf der Grundlage eines trainierten Klassifizierungsmodells unter Verwendung der Datenvektoren als Eingaben; und
   - Auslösen einer Warnung entsprechend dem Risiko;

   wobei das Klassifizierungsmodell und die Parameter so bestimmt werden, dass die Eigenschaften und das Verhalten des Schweißprofils bei der Laserleitung erfasst werden; und
   wobei die Parameter eine Scan-Geschwindigkeit v, eine Laserleistung P und einen Strahldurchmesser $D_b$ umfassen und der Transformationsschritt die Bestimmung einer Leistungsdichte $P_d$, einer Interaktionszeit $t_i$, einer bestimmten Punktenergie $E_{sp}$ und einer Energiedichte $E_d$ umfasst, so dass:

$$P_d = \frac{4 \cdot P}{\pi \cdot D_b{}^2} \; [W \cdot m^{-2}]$$

$$t_i = \frac{v}{D_b} \; [s]$$

$$E_{sp} = P_d \cdot t_i \cdot \frac{\pi \cdot D_b{}^2}{4} \; [J]$$

$$E_d = P_d \cdot t_i \; [J \cdot m^{-2}]$$

5. Überwachungssystem (5) nach dem vorstehenden Anspruch, das ferner dazu konfiguriert ist, das Risiko durch Ausführen eines Support Vector Machine-Algorithmus (SVM-Algorithmus) abzuleiten.

**Revendications**

1. Procédé de surveillance d'un processus de fabrication additive d'un produit (3), par processus de fusion sélective par laser, SLM, réalisé par un système de fabrication additive (1) à partir d'au moins un matériau (2), ledit procédé comprenant une étape d'acquisition (S1) de paramètres comportant des paramètres statiques concernant ledit au moins un matériau et des paramètres dynamiques mesurés par des capteurs (4) placés à proximité dudit système de fabrication additive ; une étape de transformation de données (S2) pour transformer lesdits paramètres en vecteurs de données ; une étape de prédiction automatique (S3) pour dériver un risque de défaut pour ledit produit sur la base d'un modèle de classification entraîné utilisant lesdits vecteurs de données en tant qu'entrée ; et une étape d'alerte (S4) pour déclencher une alerte en fonction dudit risque ;

   dans lequel ledit modèle de classification et lesdits paramètres sont déterminés de manière à capturer les caractéristiques et le comportement du profil de soudure dans la conduction laser ; et
   dans lequel lesdits paramètres comprennent une vitesse de balayage, v, une puissance laser P et un diamètre de faisceau $D_b$ et ladite étape de transformation comprend la détermination d'une densité de puissance $P_d$, d'un temps d'interaction $t_i$, d'une énergie ponctuelle spécifique $E_{sp}$ et d'une densité d'énergie $E_d$, de sorte que :

$$P_d = \frac{4 \cdot P}{\pi \cdot D_b{}^2} \ [W \cdot m^{-2}]$$

$$t_i = \frac{v}{D_b} \ [s]$$

$$E_{sp} = P_d \cdot t_i \cdot \frac{\pi \cdot D_b{}^2}{4} \ [J]$$

$$E_d = P_d \cdot t_i \ [J \cdot m^{-2}]$$

2. Procédé selon la revendication précédente, dans lequel ladite étape de prédiction automatique (S3) comprend l'exécution d'un algorithme de machine à vecteur de support, SVM.

3. Procédé selon la revendication précédente, dans lequel une carte thermique est obtenue.

4. Système de surveillance (5) pour un système de fabrication additive (1) configuré pour réaliser un processus de fabrication additive d'un produit (3) par processus de fusion sélective par laser, SLM, à partir d'au moins un matériau (2), comprenant des moyens configurés pour

   - acquérir des paramètres comportant des paramètres statiques concernant ledit au moins un matériau et des paramètres dynamiques mesurés par des capteurs (4) placés à proximité dudit système de fabrication additive ;
   - transformer lesdits paramètres en vecteurs de données ;
   - dériver automatiquement un risque de défaut pour ledit produit sur la base d'un modèle de classification entraîné utilisant lesdits vecteurs de données en tant qu'entrées ; et
   - déclencher une alerte en fonction dudit risque ;

   dans lequel ledit modèle de classification et lesdits paramètres sont déterminés de manière à capturer les caractéristiques et le comportement du profil de soudure dans la conduction laser ; et
   dans lequel lesdits paramètres comprennent une vitesse de balayage, v, une puissance laser P et un diamètre de faisceau $D_b$ et ladite étape de transformation comprend la détermination d'une densité de puissance $P_d$, d'un temps d'interaction $t_i$, d'une énergie ponctuelle spécifique $E_{sp}$ et d'une densité d'énergie $E_d$, de sorte que :

$$P_d = \frac{4 \cdot P}{\pi \cdot D_b{}^2} \ [W \cdot m^{-2}]$$

$$t_i = \frac{v}{D_b} \ [s]$$

$$E_{sp} = P_d \cdot t_i \cdot \frac{\pi \cdot D_b{}^2}{4} \ [J]$$

$$E_d = P_d \cdot t_i \ [J \cdot m^{-2}]$$

5. Système de surveillance (5) selon la revendication précédente, configuré en outre pour dériver ledit risque en exécutant un algorithme de machine à vecteurs de support, SVM.

**FIG. 1**

**FIG. 2**

**FIG. 3a**

**FIG. 3b**

**Fundamental Variables**

Process Parameters

Layer Thickness — 3.1

Scan Strategy — 3.2

Hatch Distance — 3.3

Waist Distance — 3.4

Scan Speed — 3.5

**Dependent Variables**

Interaction Time — 3.5.1

**FIG. 3c**

Initial Conditions

- Number of Powder Recycling — 4.1
- Time of Services of Machines
- Roughness Building Platform
- Flatness Building Platform
- Precision of Sensors

- Initial Podwer Temperature — 4.2
- Initial Chamber Temperature
- Initial Platform Temperature

**FIG. 3d**

FIG. 3e

FIG. 3f

**Multi-Phisics model**

**Thermal model:**
- Peak temperature
- Cooling rate
- Heating rate

**3D Melt pool Model:**
- Depth
- Width

**Manufacturing process parameters:**
- Process parameters
- Laser heat source
- Specimen geometry
- Energy transfer efficiency
- Material & Powder properties
- Initial conditions
- Storage conditions

**Output parameters:**
- Chamber temperature
- Platform temperature
- Thermal images

**Microstructure:**
- Porosity
- Residual stresses
- Anisotropy
- Microcracks
- Oxide inclusions

**Macrostructure:**
- Dimensional inaccuracy
- Surface roughness

**Macrostructure:**
- Mechanical properties
- Fatigue strength

Repeatability

Confidence

**FIG. 3g**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018341248 A1

- EP 0946325 A

**Non-patent literature cited in the description**

- *Wikipedia, https://en.wikipedia.org/wiki/Support vector machine*

- **CRISTIANINI, NELLO; ; SHAWE-TAYLOR, JOHN.** An Introduction to Support Vector Machines and other kernel-based learning methods. Cambridge University Press, 2000